# EUROPEAN PATENT SPECIFICATION

(11) **EP 3 499 136 B1**
(45) Date of publication and mention of the grant of the patent: **24.06.2020**
(21) Application number: 18202241.8
(22) Date of filing: 24.10.2018
(51) Int. Cl.: F24D 19/00, F24F 1/00, F28D 1/02, F24F 1/0033, F28D 1/03, F28D 1/053, F28D 21/00

(54) **MODULAR DEVICE FOR RADIATORS**
MODULARE VORRICHTUNG FÜR RADIATOREN
DISPOSITIF MODULAIRE POUR RADIATEURS

(30) Priority: 15.12.2017 IT 201700144897
(43) Date of publication of application: 19.06.2019
(73) Proprietor: Jacobino, Francesco, 50132 Firenze (FI) (IT)
(72) Inventor: Jacobino, Francesco, 50132 Firenze (FI) (IT)
(74) Representative: Fanfani, Stefano

(56) References cited:
- WO-A1-2007/067082
- WO-A1-2009/014478
- WO-A1-2009/133543
- DE-U1-202008 013 447
- DE-U1-202010 011 282
- ES-A2- 2 073 340
- NL-B- 2 015 238
- US-B1- 7 789 129

## Description

### Technical field

The present invention belongs to the sector of heating systems and, more specifically, it relates to devices to be installed on existing radiators in order to speed up the achievement of a thermal comfort in the rooms. Specifically, the subject of the present patent application is a modular device which is associated with a radiator and cooperates therewith to increase the effectiveness of the heat exchange between the radiator surface and the air present in the room.

### Present status of the art

According to a common technical approach, many heating systems comprise a plurality of radiators located in the rooms to be heated.

Radiators, which usually comprise a plurality of radiating elements put side-by-side to form a battery, operate as heat exchangers, by substracting heat from the thermal carrier fluid that flows therethrough, thus heating the air in the room that accommodates them.

Many types of thermal carrier fluids are known; in systems comprising a plurality of radiators, the thermal carrier fluid is usually an aqueous solution which requires a pressurized expansion vessel to compensate for changes of volume resulting from changes of temperature.

Conversely, in the case of stand-alone electrical radiators, the thermal carrier fluid is usually a diathermic liquid, typically, an oil capable of retaining its own liquid status and atmospheric pressure even at temperatures close to or greater than 100°C.

In general, radiators exchange heat with the surrounding air by radiation and by convection; the latter heat exchange is either natural or forced. In the present patent document, the term radiator will be used to identify any heaters wherein convection is natural, without any mechanical ventilation.

It is known that the thermal power exchanged by forced convection is greater than that exchanged by natural convection, in that the effectiveness of heat exchange increases as the speed whereby air laps a hot surface increases; heat convectors and fan heaters have been developed by exploiting this phenomenon, wherein the air present in the room is forced to go through the battery of radiating elements. These devices feature a number of drawbacks at the environmental comfort level, in that they are noisy and foster dust flowing and are generally unappealing aesthetically wise.

For these reasons, especially in civil houses, radiator-based heating systems are often preferred, even if natural convection is less effective than forced convection. For these reasons, radiators are usually engineered for a semi-continuous operation, in that they feature thermal inertias that are longer than those of heat convectors. Radiators require switch-on times that are longer and advanced in time as compared to the times requested by forced ventilation devices; in many cases radiators shall remain switched-on even when rooms are not inhabited, thus increasing energy consumption.

In order to obviate these drawbacks, solutions have been developed aiming at increasing the effectiveness of the heat exchange of radiators when required only, typically by blowing air on by way of fans.

Among the numerous solutions of this type, patent application EP 3124879 (A1) and patents ES 2073340 (B1) and DE 202010011282 (U1) specifically face up the problems of matching the devices to the dimensions of radiators, which vary from one room to the other and from one model to the other.

Patent application EP 3124879 (A1), in paragraph [0018], provides a list of the characteristics expected by a user of radiator enhancers, but it proposes a device wherein modularity just consist of the possibility of installing several stand-alone units in series. Patent ES 2073340 (B1) proposes a telescopic case so as to match it to the width of a radiator, however this solution keeps the number of fans used constant, thus having one and the same air rate spread over a larger output section, which evidently results in reducing the effectiveness of heat exchange.

In DE 202010011282 (U1) a support structure, available in different lengths, can accommodate a plurality of fans, a transformer, and a temperature sensor.

None of the mentioned solutions makes it possible to exactly cover the complete width of a radiator so as to provide for the same air rate in every portion of one and the same battery of radiating elements.

In DE 202008013447 (U1) a plurality of fans are integral with one and the same metal profile and form a first set, which is electrically connected to a second set by way of an external electrical cable terminating in an electrical connector at one end.

SE 0701765 (L) faces up the problem of connecting several fans to each other to cover the longitudinal development of a radiator and proposes the use of guides to convey air; the latter feature different shapes and couple with each other by way of male/female connection means.

None of the above described devices is capable of fitting the individual radiators effectively and in a simple manner.

In WO 2007/067082 it is disclosed a modular device for increasing the effectiveness of the convective heat exchange of radiators comprising fan modules suitable for being functionally associated with corresponding connection means.

Notwithstanding the numerous prior art solutions, a need is thus felt for a low-cost device, installable in a simple and safe manner by anybody, the length of which can be easily modified to fit the width of the radiator.

### Objects and summary of the invention

A first object of the present invention is thus to provide a device that fits the characteristics of the individual radiators while providing a good ventilation all along the extension of the radiator at reduced costs.

A second object of the invention is to provide a simple and safe installation of the device, preferably without using screws or tools, without the need for relying on a skilled installer, even in the case that operations are necessary in the case of a fault.

Another object of the present invention is to provide an automatically operated device, i.e. a device capable of switching on and off automatically, if and when the circumstances require it.

A last but not least object is to retain accessibility around a radiator as much as possible, for instance for cleaning purposes.

Other objects and advantages of the invention will be apparent to those skilled in the art upon reading the following text.

The above-described objects are achieved by using a device according to the claim 1. In particular, a modular device comprising one or several fan modules, equal to each other, functionally connected to a control and power supply module in order to increase heat exchange by blowing air on a radiator, said modules being constructed in such a way as to be possibly combined together to fit the width of the latter by way of engagement means which might even be of a reversible type.

According to the invention the fan module develops along a horizontal longitudinal axis and includes engagement means on both its longitudinal ends, so as to be possibly longitudinally associated with other two fan modules or with another fan module and with a control and power supply module or even with another fan module and an end module.

The fan modules comprise a vertical-axis fan located inside a box-like body, whose horizontal cases are properly perforated for allowing air to pass through, for instance by way of grids which prevent foreign bodies from entering; according to a particularly comfortable and practical solution, the connection means located at the two longitudinal ends of the module are male and female connections respectively.

Advantageously the box-like body can be shaped so that one of its longitudinal ends includes at least one ridge suitable for engaging a respective cavity present on the opposite longitudinal end of a second box-like body installed adjacent to the first box-like body.

In a particular embodiment, the connection means are at least partially made from an electrically conductive material and consequently can also be used for transferring energy between the individual modules.

The connection means might be of a reversible type, in order to allow to disassemble the modular device.

The cost of the module can be particularly low should the box-like body be made from a plastic material, for instance obtained by molding two identical half-parts or by co-molding, should electrically conductive metal elements be present, and standard fans are used like those available on the market, for instance those used in electronic processors. According to a particularly simple embodiment, the control and power supply module comprises a temperature sensor which is installed in contact with the surface of the radiator. The sensor might be made integral with any element of the modular device that is in contact with the radiator, for instance one of the hooking elements.

The opening and closing of the electric circuit that supplies power to the fans in the fan modules associated with the control and power supply module are determined by the temperature of the radiator as taken from the temperature sensor, hence the fan modules are only switched on when the radiator is at a desired temperature.

According to a preferred embodiment of this version, ventilation is activated whenever the temperature of the radiator is equal to or greater than 32°C, whereas ventilation is disconnected as son as the temperature drops below 30°C.

Versions are provided with sensors of different types, for instance scan sensors or infrared sensors. If scan sensors are used, these might be made integral with the control and power supply module.

More complex versions of the control and power supply module make it possible to manage further parameters, such as the temperature of the room or the hourly and/or daily scheduling of the operation; however, the importance of further adjustment facilities is residual with respect to the main adjustment provided by the temperature sensor, which holds ventilation on only while the radiator is in operation.

In order for the handling of the fan modules and of the control and power supply modules to be safe, solutions are preferred wherein the fans receive a low voltage electric power via a transformer connected to the mains; the transformer might be accommodated inside the control and power supply module. In versions designed for special requirements, the latter might include a battery to be used, for instance, when the mains voltage fails.

In most versions, the control and power supply module is provided with a user interface for entering the operating parameters, for instance by way of a touch screen display or by way of push-buttons or a wireless control circuit, such as an application for electronic devices such as smartphone, tablet, PC and the like.

The device according to the present patent application can be affixed in any points of a radiator, provided the air jet is directed toward the latter; best results are obtained by installing the device under the radiator so that fans drive air bottom up.

As shown in the attached drawings, a particularly complete version of the invention comprises a plurality of hanging elements. According to a simple and practical solution, the hanging elements are transversal rings, suitable for enclosing the modules internally thereto, which include an elastic hook above, by means of which they are hung to the lower manifold of the radiator. Other embodiments are provided for associating the device with a radiator, for instance by way of magnetic hanging elements. Some of these solutions are described in the above-mentioned documents and are incorporated herein.

### Brief description of the drawings

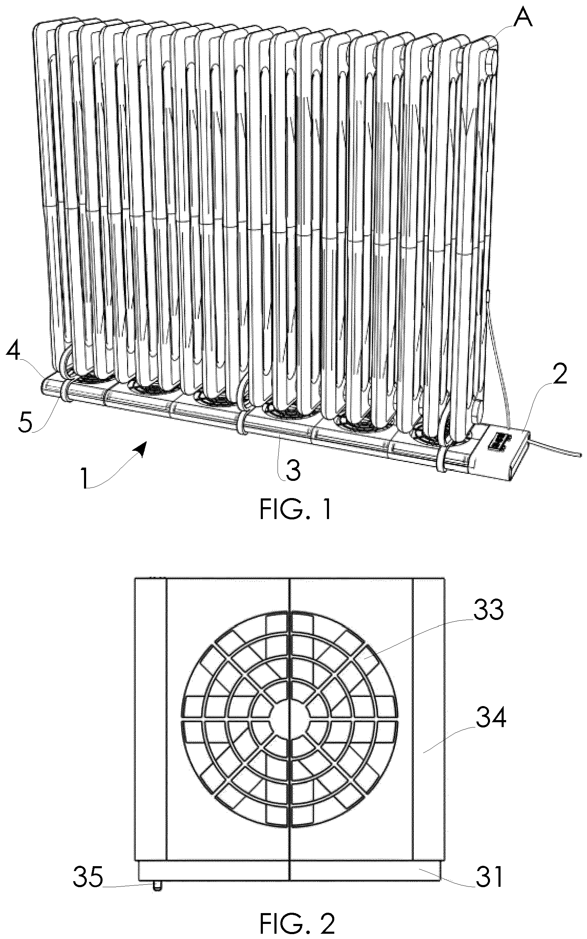

**Figure 1** shows an axonometric view of a radiator (A) on which an embodiment of the device (1) is installed, provided with a control and power supply module (2) located at the opposite end with respect to the end module (4). Note that the hanging elements (5) which support some of the fan modules (3) keep the device close to the lower surface of the radiator, which will consequently be fully hit by forced ventilation.
**Figure 2** shows a top view of one embodiment of a fan module, which shows a male connection means (31) derived on the box-like body (34) which accommodates a fan (33); an input electrical connector (35) is also visible.
**Figure 3** shows a side view of the same fan module (3) as in the previous figure.

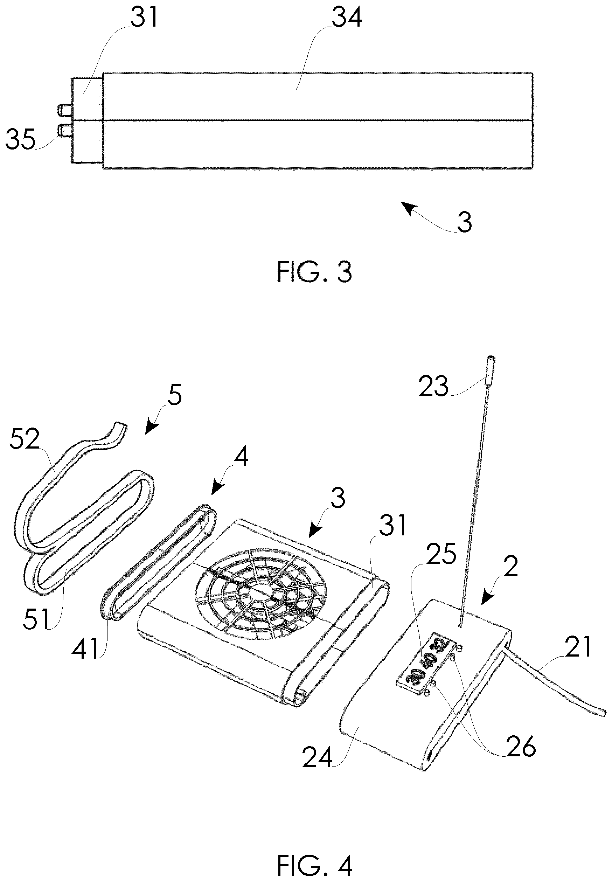

**Figure 4** shows an exploded view of one embodiment of the device (1) having one only fan module (3) properly closed by an end module (4) and including one hanging element (5) for connecting to the radiator. The box-like body (34) of the fan module accommodates a fan (33) which drives air through an upper grid. On the right there is a control and power supply module (2), provided with a screen (25) on which the temperature taken by the contact temperature sensor (23) and the switch-on and -off values set via the push-buttons (26) present on the box-like body (24), can be read. In this version, the switch-on and the switch-off button is located at the longitudinal end of the control and power supply module (2), from which a power cable (21) start for being connected to the mains. The hanging element includes a closed ring (51), the inner cross-section of which is just a little greater than the cross-section of the box-like body (34) of the fan module (3), and a hook (52) to be hung to the lower manifold of the radiator.

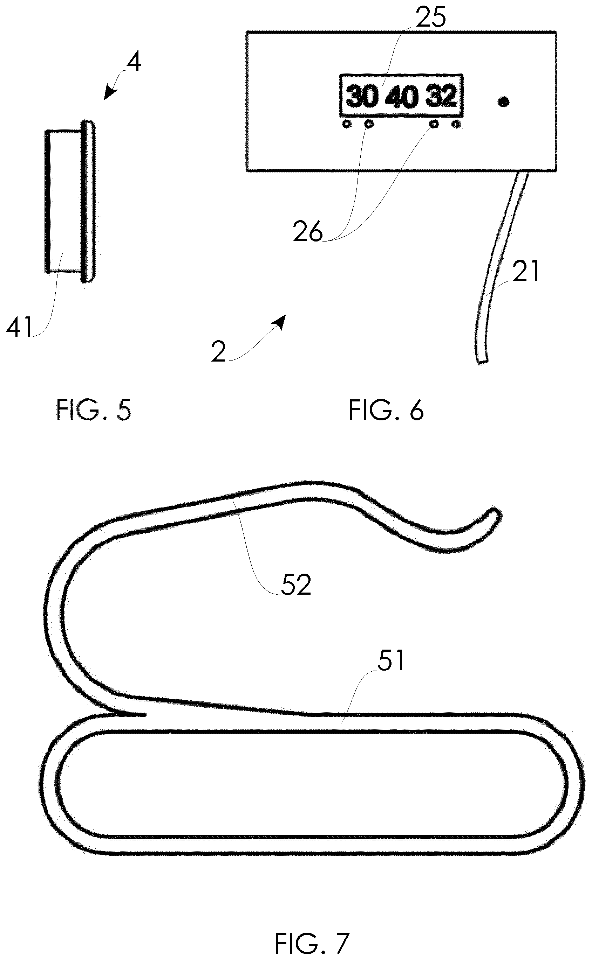

**Figure 5** shows a side view of the end module (4) depicted in figure 4 in which there is a connecting means between the male type module (41).
**Figure 6** shows a top view of the control and power supply module (2) depicted in figure 4.
**Figure 7** shows a side view of the hanging element (5) depicted in figure 4.

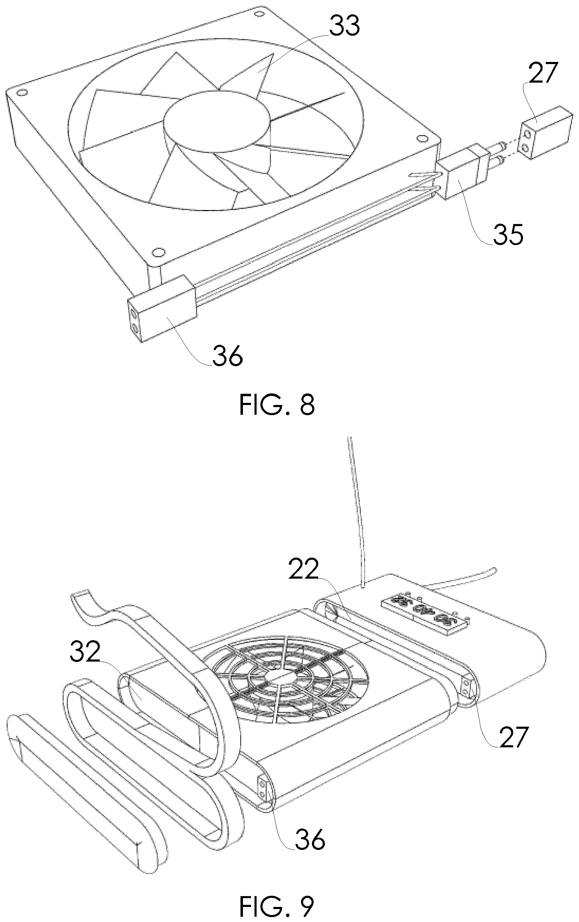

**Figure 8** shows an exploded view of the fan module (3) in the embodiment of the device (1) shown in figure 4. Some elements, including the box-like body (34), are cut away to better illustrate the connection between the input electrical connector (35), the output electrical connector (36) and the fan (33). In this figure the electrical connection to the output electrical connector (27 of the control and power supply module (2) is also visible.
**Figure 9** shows an exploded view of the same device (1) depicted in figure 4 from a different angle suitable for viewing the female connection means (22, 32) of the control and power supply module (2) and of the fan module (3) respectively.

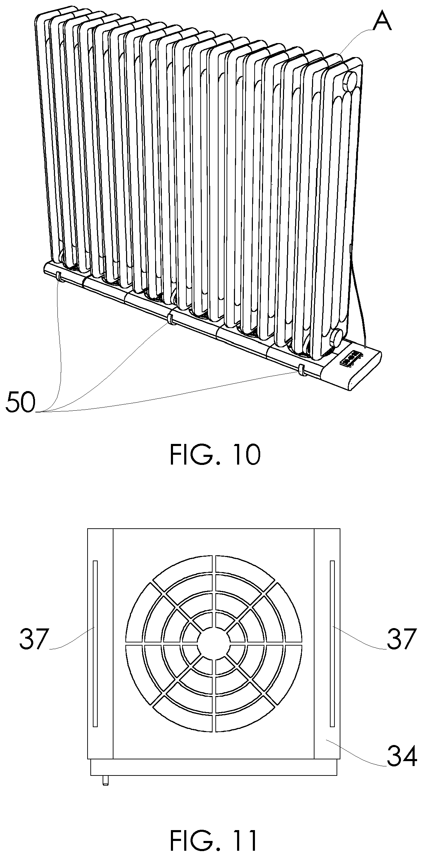

**Figure 10** shows an axonometric view of one embodiment of the device (1) installed on a radiator (A) by way of open hooking elements (50).
**Figure 11** shows a top view of a version of the box-like body (34) provided with two longitudinal grooves (37).

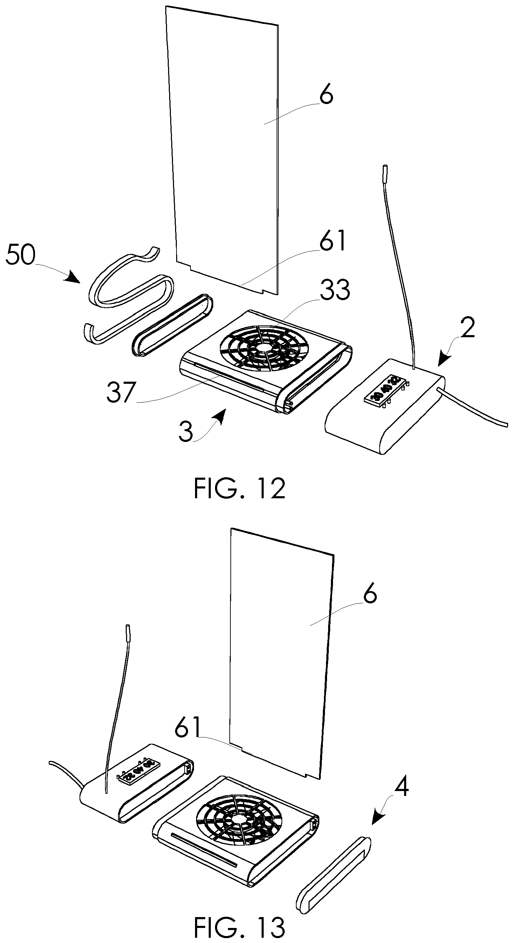

**Figure 12** shows an exploded view of one embodiment of the device (1) comprising a bulkhead (6) provided with a tooth (61) which projects from the lower edge and is suitable for engaging a groove (37).
**Figure 13** shows the device according to the previous figure from a different point of observation, with the open hooking element removed.

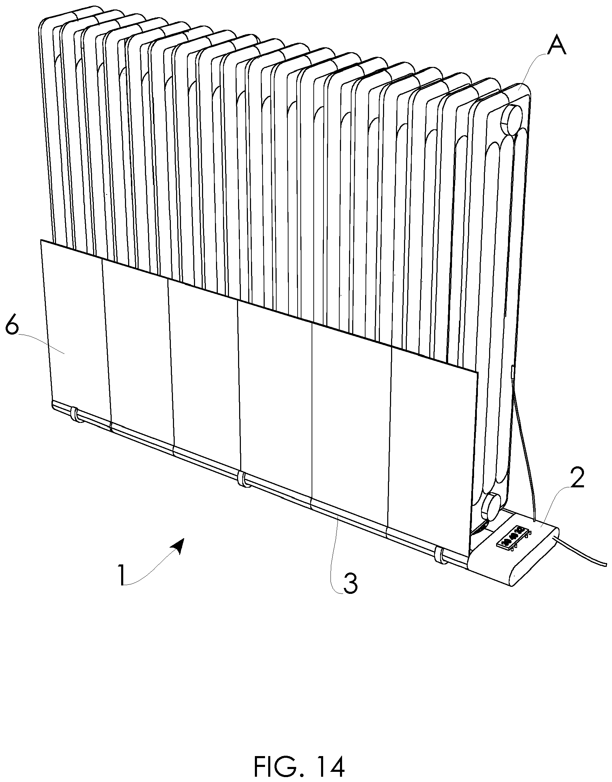

**Figure 14** shows one embodiment of the device (1), complete with a bulkhead (6), installed on a radiator (A). Note that the bulkhead channels the air flow coming from the fan modules (3) over a first vertical length of the radiator.

### Detailed description of one embodiment of the invention

In one particularly complete embodiment, the device according to the present patent application comprises a control and power supply module (2), functionally connected to at least one fan module (3) and to at least one hanging element (5) in order for it to be hung below a radiator. According to a particularly effective embodiment, at least one of the longitudinal ends of the individual modules of the device includes connection means suitable for engaging the corresponding connection means of the adjacent modules, to make it possible to connect a plurality of fan modules (3) to one control and power supply module (2).

The modular device here described is supplemented by at least one end module (4), which in turn includes connection means suitable for engaging the corresponding connection means of an adjacent module.

The fan module (3) comprises a box-like body (34) whose horizontal faces are perforated, so as to allow the air driven by a vertical axis fan (3) to flow.

The control and power supply module (2) usually receives power from the mains, but it might even receive power from a battery or, in any case, it might accommodate a battery internally thereto, to be used whenever the mains voltage fails. Also, the control and power supply module (2) comprises a sensor which takes the temperature of the surface of the radiator and keeps ventilation on only while the radiator is in operation.

The temperature sensor is usually external to the control and power supply module (2) and comprises fixing means, for instance magnetic fixing means, for fixing it to the radiator.

The control and power supply module (2) might comprise a user interface which might be used to set the operating parameters of the device.

Typically, the control and power supply module (2) is installed at one end of the modular device (1) according to the present patent application, whereas an end module (4) is installed at the opposite end (4); however, the control and power supply module (2) might even be installed in an intermediate position, in which case an end module (4) could be installed at each of the ends of the device (1).

The connection between the individual modules can be made in different ways, in particular, in a particularly effective embodiment, each longitudinal end of the fan module (3) includes a respective male or female connection means, in order for it to be possibly associated with the corresponding female or male connection means present in the corresponding longitudinal end of an adjacent module.

In a simple and cost-effective embodiment the female connection means (32) consists of a perimetric ridge which longitudinally rises along the edge of either face of every fan module (3), whereas its corresponding connection means (31) consists of a ridge which longitudinally rises internally to the edge of the end face opposite to that of the female connection means (32); the outer side surface of the ridge of the male connection means (31) is suitable for engaging the inner side surface of its corresponding ridge of the female connection means (32).

Each of the longitudinal ends of the fan modules (3) comprises a respective input electrical connector (35) and a respective output electrical connector (36), each of which is suitable for reciprocally engaging its corresponding electrical connector of an adjacent module. According to a particularly simple version, the output electrical connector of the fan module (3) associated with the end module (4) remains free.

According to an advantageous embodiment, said input and output electrical connectors (35 and 36 respectively) face each of said longitudinal ends of said modules respectively, in a symmetrical position with respect to the median plane of the ends themselves.

Once assembled, the device (1) can be hung below a radiator by way of one or several hanging elements (5), each of which comprises an upper hook (52) and a lower closed ring (51); the fan modules (3) are accommodated internally to the latter. The installation of the device (1) on a radiator is particularly comfortable and stable if the upper hook (52) is at least partially elastic; the upper hook (52) is usually anchored above the lower manifold of the radiator, which connects different radiating elements to each other.

A different embodiment comprises an open hanging element (50) with a ring that is open below so as to embrace the fan modules (3) at the transversal ends only.

In a particularly complete embodiment, the modular device (1) comprises at least one bulkhead (6), which develops vertically and is provided below with coupling means for coupling with the coupling means of at least one fan module (3). Preferably the device comprises one bulkhead (6) for every fan module (3), however numerous variants are possible, for instance one wherein bulkheads develop longitudinally over two or several fan modules (3). According to a particularly simple embodiment, the lower edge of the bulkhead (6) comprises a tooth (61) which is suitable for engaging a preferably longitudinal groove (37), cut on the upper face of the box-like body (34) of the fan module (3); this groove might be a through groove one. Is possible an embodiment with two grooves on the opposite sides of the upper face of each box-like body, thus enabling a reversible mounting of the modular device.

According to a preferred embodiment, the bulkheads are made from a plastic material; variant are possible, for instance they might be made from a metal sheet.

## Claims

1. A modular device (1) for increasing the effectiveness of the convective heat exchange of radiators comprising a control and power supply module (2) which supplies electric power to at least one fan module (3), on at least one of their longitudinal ends said modules (2, 3) including male or female connector means (31, 32), said fan modules (3) being equal to each other and each of them comprises at least one vertical-axis fan (33), placed internally to a box-like body (34) whose horizontal faces are properly perforated for allowing air to pass through and at the longitudinal ends of which said male connection means (31) and said female connection means (32), suitable for being functionally associated with corresponding connection means of at least one adjacent module, are defined, said device (1) comprising hanging means for hanging it below a radiator (A); said control and power supply module (2) being functionally connected to at least one sensor which detects the surface temperature of the radiator (A), **characterized in that** said male/female connector means (31,32) comprise also male/female input and output electrical connection means (35,36) providing a direct mechanical connection and electric connection between said fan module (3) and an adjacent module.

2. The device according to claim 1 **characterized in that** the box-like bodies (34) of every fan module (3) and the box-like body (24) of said control and power supply module (2) have an identical outer section.

3. The device according to any of the previous claims **characterized in that** it comprises an end module (4) which includes connection means suitable for engaging its corresponding connection means of said fan modules (3).

4. The device according to any of the previous claims **characterized in that** said hanging means for associating with a radiator comprise at least one hanging element (5) which includes a lower ring, whose inner section is shaped for accommodating the box-like body of said at least one fan module (3), and an upper hook (52) for anchoring to the radiator (A).

5. The device according to the preceding claim **characterized in that** the lower ring of said at least one hanging element (50) is open.

6. The device according to any of the previous claims **characterized in that** said control and power supply module (2) accommodates at least one battery.

7. The device according to any of the previous claims **characterized in that** said at least one sensor of the control and power supply module is a contact temperature sensor (23).

8. The device according to any one of claims 1 to 6 **characterized in that** said at least one sensor of the control and power supply module is a scan sensor.

9. The device according to any of the previous claims **characterized in that** said control and power supply module (2) comprises a user interface for entering the operating parameters.

10. The device according to any of the previous claims **characterized in that** it comprises at least one vertical bulkhead (6) provided with coupling means below for coupling with coupling means of at least one fan module (3).

11. The device according to the previous claim **characterized in that** said coupling means of the bulkhead (6) comprise at least one tooth (61) which originates from the lower edge and said coupling means of the fan module (3) comprises at least a groove (37) on the upper face of said box-like body (34) suitable for accommodating said at least one tooth (61).

12. The device according to any of the previous claims **characterized in that** said connection means (31, 32) of the fan modules are at least partially made from an electrically conductive material and operate as an input electrical connector or as an output electrical connector.

## Patentansprüche

1. Modulare Vorrichtung (1) zur Erhöhung des Wirkungsgrads des Konvektionswärmetauschs von Radiatoren, umfassend ein Steuer- und Stromversorgungsmodul (2), das mindestens ein Gebläsemodul (3) mit Strom versorgt, wobei diese Module (2, 3) an mindestens einem ihrer längsseitigen Enden Stecker- oder Buchsenanschlussmittel (31, 32) einschließen, wobei die Gebläsemodule (3) miteinander identisch sind und ein jedes von ihnen mindestens einen Vertikalachsenlüfter (33) umfasst, der innenseitig in einem kastenähnlichen Gehäuse (34) untergebracht ist, dessen horizontale Seitenflächen angemessen perforiert sind, sodass Luft durchströmen kann, und an dessen längsseitigen Enden die Steckeranschlussmittel (31) und die Buchsenanschlussmittel (32), die geeignet sind, um in funktioneller Hinsicht mit entsprechenden Anschlussmitteln von mindestens einem angrenzenden Modul verbunden zu werden, definiert sind, wobei die Vorrichtung (1) Hängemittel umfasst, um sie unter einem Radiator (A) aufzuhängen, wobei das Steuer- und Stromversorgungsmodul (2) in funktioneller Hinsicht mit mindestens einem Sensor verbunden ist, der die Oberflächentemperatur des Radiators (A) erfasst, **dadurch gekennzeichnet, dass** die Stecker-/Buchsenanschlussmittel (31, 32) auch elektrische Stecker-/Buchsenein- und -ausgangsanschlussmittel (35, 36) umfassen, die eine direkte mechanische Verbindung und eine elektrische Verbindung zwischen dem Gebläsemodul (3) und einem angrenzenden Modul bereitstellen.

2. Vorrichtung nach Anspruch 1, **dadurch gekennzeichnet, dass** die kastenähnlichen Gehäuse (34) eines jeden Gebläsemoduls (3) und das kastenähnliche Gehäuse (24) des Steuer- und Stromversorgungsmoduls (2) einen identischen Außenquerschnitt aufweisen.

3. Vorrichtung nach einem der vorhergehenden Ansprüche, **dadurch gekennzeichnet, dass** sie ein Endmodul (4) umfasst, das Anschlussmittel einschließt, die geeignet sind, um in die entsprechenden Anschlussmittel der Gebläsemodule (3) einzugreifen.

4. Vorrichtung nach einem der vorhergehenden Ansprüche, **dadurch gekennzeichnet, dass** die Hängemittel zum Assoziieren mit einem Radiator mindestens ein Hängeelement (5) umfassen, das einen unteren Ring einschließt, dessen Innenquerschnitt ausgeformt ist, um das kastenähnliche Gehäuse des mindestens einen Gebläsemoduls (3) aufzunehmen, und einen oberen Haken (52) für die Verankerung am Radiator (A).

5. Vorrichtung nach dem vorhergehenden Anspruch, **dadurch gekennzeichnet, dass** der untere Ring des mindestens einen Hängeelements (50) offen ist.

6. Vorrichtung nach einem der vorhergehenden Ansprüche, **dadurch gekennzeichnet, dass** das Steuer- und Stromversorgungsmodul (2) mindestens eine Batterie aufnimmt.

7. Vorrichtung nach einem der vorhergehenden Ansprüche, **dadurch gekennzeichnet, dass** der mindestens eine Sensor des Steuer- und Stromversorgungsmoduls ein Kontakttemperatursensor (23) ist.

8. Vorrichtung nach einem der Ansprüche 1 bis 6, **dadurch gekennzeichnet, dass** der mindestens eine Sensor des Steuer- und Stromversorgungsmoduls ein Abtastsensor ist.

9. Vorrichtung nach einem der vorhergehenden Ansprüche, **dadurch gekennzeichnet, dass** das Steuer- und Stromversorgungsmodul (2) eine Benutzerschnittstelle zur Eingabe der Betriebsparameter umfasst.

10. Vorrichtung nach einem der vorhergehenden Ansprüche, **dadurch gekennzeichnet, dass** sie mindestens eine vertikale Stützwand (6) umfasst, die mit Kupplungsmitteln unten für die Kupplung mit den Kupplungsmitteln von mindestens einem Gebläsemodul (3) versehen ist.

11. Vorrichtung nach dem vorhergehenden Anspruch, **dadurch gekennzeichnet, dass** die Kupplungsmittel der Stützwand (6) mindestens einen Zahn (61) umfassen, der von der Unterkante entspringt, und dass die Kupplungsmittel des Gebläsemoduls (3) mindestens eine Nut (37) an der oberen Seitenfläche des kastenähnlichen Gehäuses (34) umfassen, die geeignet ist, um den mindestens einen Zahn (61) aufzunehmen.

12. Vorrichtung nach einem der vorhergehenden Ansprüche, **dadurch gekennzeichnet, dass** die Anschlussmittel (31, 32) der Gebläsemodule mindestens teilweise aus einem elektrisch leitenden Werkstoff gefertigt sind und als elektrischer Eingangsverbinder oder als elektrischer Ausgangsverbinder arbeiten.

## Revendications

1. Dispositif modulaire (1) pour augmenter l'efficacité du transfert thermique par convection de radiateurs comprenant un module de commande et alimentation (2) qui alimente électriquement au moins un module de ventilation (3), sur au moins une des extrémités longitudinales duquel lesdits modules (2, 3) comprenant des moyens de connexion mâles et femelles (31, 32), lesdits modules de ventilation (3) étant égaux l'un par rapport à l'autre et chacun d'eux comprenant au moins un ventilateur à axe vertical (33), placé à l'intérieur d'un corps en forme de boîte (34) dont les faces horizontales sont convenablement forées de sorte à permettre la circulation de l'air et aux extrémités longitudinales duquel sont définis lesdits moyens de connexion mâles (31) et lesdits moyens de connexion femelles (32), adaptes pour être fonctionnellement associés aux moyens de connexion correspondants d'au moins un module adjacent, ledit dispositif (1) comprenant des moyens d'accrochage pour l'accrocher en dessous du radiateur (A) ; ledit module de commande et alimentation (2) étant fonctionnellement relié à au moins un capteur qui détecte la température superficielle du radiateur (A), **caractérisé en ce que** lesdits moyens de connexion mâles/femelles (31, 32) comprennent également des moyens de connexion électrique d'entrée et de sortie mâles/femelles (35, 36) fournissant une connexion mécanique et une connexion électrique directes entre ledit ventilateur (3) et un module adjacent.

2. Dispositif selon la revendication 1, **caractérisé en ce que** les corpos en forme de boîte (34) de chaque module de ventilation (3) et le corps en forme de boîte (24) dudit module de commande et alimentation (2) ont une section extérieur identique.

3. Dispositif selon l'une quelconque des revendications précédentes **caractérisé en ce qu'**il comprend un module d'extrémité ($) qui inclut des moyens de connexion adaptés pour engager ses moyens de connexion correspondants desdits modules de ventilation (3).

4. Dispositif selon l'une quelconque des revendications précédentes **caractérisé en ce que** lesdits moyens d'accrochage pour s'associer à un radiateur comprennent au moins un élément d'accrochage (5) qui inclut une bague inférieure, la section intérieure de laquelle est façonnée pour recevoir le corps en forme de boîte dudit au moins un module de ventilation (3), et un crochet (52) pour s'ancrer au radiateur (A).

5. Dispositif selon la revendication précédente **caractérisée en ce que** la bague inférieure dudit au moins un élément d'accrochage (50) est ouvert.

6. Dispositif selon l'une quelconque des revendications précédentes **caractérisé en ce que** ledit module de commande et alimentation (2) reçoit au moins une batterie.

7. Dispositif selon l'une quelconque des revendications précédentes **caractérisé en ce que** ledit au moins un capteur du module de commande et alimentation est un capteur de température à contact (23).

8. Dispositif selon l'une quelconque des revendications 1 à 6 **caractérisé en ce que** ledit capteur du module de commande et alimentation est un capteur à balayage.

9. Dispositif selon l'une quelconque des revendications précédentes **caractérisé en ce que** ledit module de commande et alimentation (3) comprend une interface utilisateur pour la saisie des paramètres opérationnels.

10. Dispositif selon l'une quelconque des revendications précédentes **caractérisé en ce qu'**il comprend au moins une cloison verticale (&) équipé de moyens d'accouplement pour l'accouplement avec les moyens d'accouplement d'au moins un module de ventilation (3).

11. Dispositif selon la revendication précédente **caractérisée en ce que** lesdits moyens d'accouplement du cloison (6) comprennent au moins une dent (61) qui part du bord inférieur et lesdits moyens d'accouplement du module de ventilation (3) comprennent au moins une rainure (37) sur la face supérieure dudit corps en forme de boîte (34) adaptée pour recevoir au moins une dent (61).

12. Dispositif selon l'une quelconque des revendications précédentes **caractérisé en ce que** lesdits moyens de connexion (31, 32) du module de ventilation sont au moins partiellement faits en un matériel électriquement conductif et fonctionnent comme des connecteurs électriques d'entrée ou comme des connecteurs électriques de sortie.
